# EUROPÄISCHE PATENTSCHRIFT

(11) **EP 1 406 774 B1**
(45) Veröffentlichungstag und Bekanntmachung des Hinweises auf die Patenterteilung: **16.01.2008**
(21) Anmeldenummer: 02758311.1
(22) Anmeldetag: 05.07.2002
(51) Int. Cl.: B60C 23/04, B60C 23/06

(54) **SYSTEM UND VERFAHREN ZUR ÜBERWACHUNG DES REIFENDRUCKS IN KRAFTFAHRZEUGEN**
SYSTEM AND METHOD FOR MONITORING TIRE PRESSURE IN MOTOR VEHICLES
SYSTEME ET PROCEDE DE CONTROLE DE LA PRESSION DES PNEUS D'UN VEHICULE AUTOMOBILE

(30) Priorität: 09.07.2001 DE 10132559; 01.08.2001 DE 10137290
(43) Veröffentlichungstag der Anmeldung: 14.04.2004
(73) Patentinhaber: Continental Teves AG & Co. oHG, 60488 Frankfurt am Main (DE)
(72) Erfinder: FENNEL, Helmut, 65812 Bad Soden (DE); SÄGER, Peter, 61381 Friedrichrichsdorf (DE)
(86) Internationale Anmeldenummer: PCT/EP2002/007445
(87) Internationale Veröffentlichungsnummer: WO 2003/006268

(56) Entgegenhaltungen:
- EP-A- 1 044 829
- DE-A- 4 205 911
- DE-A- 19 618 658
- DE-A- 19 938 431

## Beschreibung

Die Erfindung betrifft ein Reifendrucküberwachungssystem gemäß Oberbegriff von Anspruch 1 und ein Verfahren gemäß Oberbegriff von Anspruch 6.

Es sind verschiedene Arten von Reifendrucküberwachungssystemen für Kraftfahrzeuge bekannt. Direktmessende Systeme, wie TPMS, wie sie zum Beispiel aus der DE 199 26 616 oder der DE 199 38 431 (beide Continental AG) bekannt sind, bestimmen den Reifendruck mittels im Reifenventil integrierter Reifendruckmeßmodule. Der gemessene Reifendruck wird gemeinsam mit einer Temperaturinformation an einen im Fahrzeug installierten Empfänger ausgesendet. Ein solches Modul kann beispielsweise in Ventilnähe in der Felge montiert oder mit dem Ventil baulich vereinigt werden. Mittels dieses Moduls wird der Reifendruck und zusätzlich die aktuelle Reifentemperatur gemessen. Die Druck- und Temperaturinformation wird drahtlos zu einem im Fahrzeug installierten Empfänger übertragen und in einer Elektronik entsprechend der vorhandenen Warnstrategie verarbeitet. In manchen Fällen wird der aktuelle Druckwert ständig in einem Display im Armaturenbrett angezeigt. Es ist zusätzlich oder alternativ, je nach Warnstrategie möglich, den Fahrer beim Unterschreiten einer Luftdruckschwelle zu warnen.

Aus der Schrift EP 1 044 829 A2 ist ein Kraftfahrzeug mit einem ersten Reifendruckkontrollsystem, welches auf jedem Rad eine Reifendruckkontrollvorrichtung enthält, die in regelmäßigen zeitlichen Abständen eine Datensendung mit dem gemessenen Luftdruck an eine Zentraleinheit übermittelt, und einem weiteren, unabhängigen Reifendruckkontrollsystem bekannt, welches den Luftdruck überwacht, wenn zwischen zwei Datensendungen einer Reifendruckkontrollvorrichtung eine zu lange Sendepause entsteht.

Wenn die Anforderungen an die Meßgenauigkeit geringer sind bzw. lediglich eine Warnfunktion benötigt wird, kommen neuerdings auch indirekt messende Reifendruckwarnsysteme zum Einsatz. Entsprechende Systeme sind unter anderem aus der DE 100 44 114 A1 (P 9777) oder der EP 0 983 154 A1 (P 8980) unter dem Namen DDS (Deflation Detection System, Fa. Continental Teves AG & Co. oHG) bekannt. Die indirekten Systeme benötigen keine Drucksensoren in den Rädern. Die Messung eines Reifendruckverlusts beruht vielmehr ausschließlich auf der Messung der Raddrehzahlen, dem Vergleich der Drehzahlmeßwerte der einzelnen Räder untereinander und dem Auswerten von Änderungen der Drehzahlen bzw. der Abrollumfänge der Reifen. Ein Luftdruckverlust führt nämlich zu einem veränderten Abrollumfang und damit zu einer geänderten Radgeschwindigkeit. Dieser Effekt wird mit dem auf der Drehzahlmessung basierenden System ausgewertet. Bei Schwellenwertüberschreitung des bei DDS verwendeten Referenz-Parameters wird dem Fahrer Druckverlust signalisiert. Die verwendeten Schwellenwerten werden in einer der Vergleichsphase vorausgehenden Lernphase gebildet. Das System DDS ist durch Auswertung von Vergleichswerten unterschiedlicher Radpaarungen außerdem in der Lage, die Position eines Rades mit zu geringem Druck festzustellen.

Ein Verfahren zur Erkennung eines Druckverlustes an einem Reifen anhand der Abrollumfänge der Reifen wird auch in EP 0 647 536 A1 offenbart.

Bekannte Druckmeßsystem, seien sie direktmessend oder indirektmessend, sind insofern nachteilig, als ohne weitere Maßnahmen keine Überprüfung der ermittelten Druckmeßwerte stattfinden kann. Werden zum Beispiel Sicherheitsfunktionen an die ermittelten Druck- oder Temperaturinformationen geknüpft, wie beispielsweise eine Fahrerwarnung, so sind Fehlwarnungen zumindest dann schwer auszuschließen, wenn für die Druck-/bestimmung kein Redundanzkonzept vorgesehen ist.

Der Erfindung liegt daher die Aufgabe zugrunde, ein Reifendrucküberwachungssystem zu entwickeln, das sich durch eine vergleichsweise hohe Genauigkeit der Druckverlustanzeige, hohe Sicherheit der Anzeige von Druckverlust und hohe Sicherheit vor Fehlanzeigen auszeichnet und das zusätzlich auch erkennen läßt, an welchem Rad und an welcher Radposition der Druckverlust aufgetreten ist. Dieses Ziel soll mit geringem Gesamtaufwand bzw. Herstellungsaufwand erreicht werden.

Es hat sich gezeigt, daß diese Aufgabe durch das im Anspruch 1 beschriebene Überwachungssystem und das Verfahren gemäß Anspruch 6 gelöst werden kann, dessen Besonderheit darin besteht, daß das auf Messung des Reifendrucks basierende System mit einem zweiten Reifendrucküberwachungssystem, welches den Reifendruck ausschließlich durch Vergleich und Auswertung des Drehverhaltens der einzelnen Fahrzeugräder detektiert, baulich und/oder funktionell vereinigt ist. Kombiniert man also die TPMS-Funktion und das Meßprinzip von DDS miteinander, so kann eine Ortung bzw. Positionsbestimmung der Räder unter Verwendung von lediglich einer zentralen Empfangseinheit vorgenommen werden.

Unter dem Begriff "Positionserkennung" wird verstanden, wenn die Position eines Rades mit einem jeweils dem Rad fest zugeordnetem Druckmeßmodul durch das System automatisch festgestellt werden kann. Hierzu genügt nicht, daß die Druckmeßmodule voneinander unterscheidbar sind, denn bei einer manuellen Vertauschung der Räder des Kraftfahrzeugs kann sich die Zuordnung zu den Radhäusern verändern. Je nach der gestellten Anforderung soll der Luftdruck innerhalb der Fahrerschnittstelle radindividuell verarbeitet bzw. angezeigt werden, oder aber es ist ausreichend, bei Luftdruckverlust eines oder mehrerer Räder nur eine bezüglich der Radposition pauschale Druckwarnung auszugeben.

In an sich bekannten direktmessenden Druckmeßsystemen ist ein zusätzlicher Aufwand an Hardware-Bauteilen für die Positionserkennung nötig. Gemäß der Erfindung kann dieser zusätzliche Hardware-Aufwand drastisch reduziert werden. Außerdem können vorzugsweise unterschiedliche Warnschwellen für die Vorder- bzw. Hinterachse realisiert werden. Ein weiterer Vorteil der Erfindung ist, daß die Erkennungssicherheit eines Systems durch Überprüfung mit jeweils dem anderen Systems verbessert wird.

In einem entsprechend ausgeführten System werden die absoluten Druckinformationen von den TPMS-Sensoren geliefert. Weichen die Drücke in den Rädern voneinander ab, führt dies zu einem unterschiedlichen dynamischen Radumfang und dadurch zu unterschiedlichen Radgeschwindigkeiten. Diese in der Regel verhältnismäßig kleinen Radgeschwindigkeitsdifferenzen lassen sich durch DDS erkennen und einer Radposition zuordnen. Durch geeignete logische Verknüpfungen der Räder untereinander (achsweise und seitenweise) läßt sich somit eine Positionserkennung realisieren. Die Positionserkennung erfolgt insbesondere entsprechend dem Verfahren in der DE 100 44 14 A1 und der EP 0 983 154 A1. Nach dem bekannten DDS-Verfahren werden zwei oder mehrere Referenzwerte gebildet und verglichen, die sich durch Permutation der Radgeschwindigkeiten in ihren Parametern voneinander unterscheiden. Auf diese Weise ist die Radposition für den besonders wahrscheinlichen Fall bestimmbar, daß genau ein Rad einen Druckverlust aufweist. Somit ist durch die Kombination der TPMS-Sensoren mit den Raddrehzahlinformationen ein kostengünstige Verbesserung eines TPMS-Systems realisierbar.

Dabei ist vorzugsweise die zentrale Empfangseinrichtung, welche beispielsweise eine elektronische HF-Empfangsschaltung ist, nicht mit einer Einrichtung zur Positionserkennung ausgestattet. An sich bekannte Druckmeßsysteme mit Positionserkennung benötigen zum Beispiel vier in der Nähe der Räder montierte Empfänger oder Antennen. Über statistische Auswahlverfahren kann das jeweilige Rad dann lokalisiert werden( z.B. über die Empfangsfeldstärke).

Aber auch ein System mit vier Empfängern kann vorteilhaft sein, wenn vom System auch unmittelbar nach einer DDS-Lernphase beliebige Radpositionen selbständig erkannt werden sollen.

Es ist weiterhin vorteilhaft und bevorzugt, daß mit dem Verfahren der Erfindung unterschiedliche Druckwarnschwellen realisiert werden, zum Beispiel radindividuelle oder achsenindividuelle Druckwarnschwellen.

Durch die Kombination der bekannten Systeme bzw. durch die Erweiterung des auf Reifendruckmessung beruhenden Systems durch das ausschließlich auf Drehzahlmessung basierende System wird insgesamt ein nur wenig aufwendigeres, jedoch insbesondere zuverlässigeres und damit sicheres Überwachungssystem geschaffen.

Auch in den Bereichen, in denen auf Grund der großen Toleranzen das auf Drehzahlmessung beruhende System keine genauen Absolutwerte liefert, kann eine Überprüfung stattfinden. Meldet beispielsweise ein Drucksensor einen schnellen Druckabfall, so wird mindestens die Raddrehzahl einen Hinweis geben, daß in der Tendenz ein Druckabfall wahrscheinlich ist.

Ein großer Vorteil dieser Kombination ist, daß Fehlwarnungen und Einlernzeiten, welche bei DDS üblich sind, auf ein Minimum reduziert werden können.

Im Weiteren können nach einer bevorzugten Ausführungsform des Verfahrens mit den so erhaltenen sicheren Druckdaten auch druckabhängige Eingriffe in die Sicherheitsfunktionen und in Kraftfahrzeug-Regelungssysteme mit ABS, oder z.B. in einem mit einer Fahrstabilitätsregelungssystem (ESP) erweiterten Regelsystem vorgenommen werden.

Die Auswerteeinrichtung der Reifendruckmeßsignale kann in der Elektronik des vorhandenen Regelungssystems Platz finden oder als Bestandteil eines Bremsen und/oder Fahrdynamik-Reglers oder -Reglerprogramms ausgebildet werden. Im letztgenannten Fall sind dann durch das DDS die Rohsignale der Raddrehzahlsensoren nutzbar, was die Genauigkeit und Verfügbarkeit des Systems weiter erhöht.

Weitere bevorzugte Ausführungsformen ergeben sich aus den Unteransprüchen und der nachfolgenden Beschreibung eines Ausführungsbeispiels an Hand von Figuren.

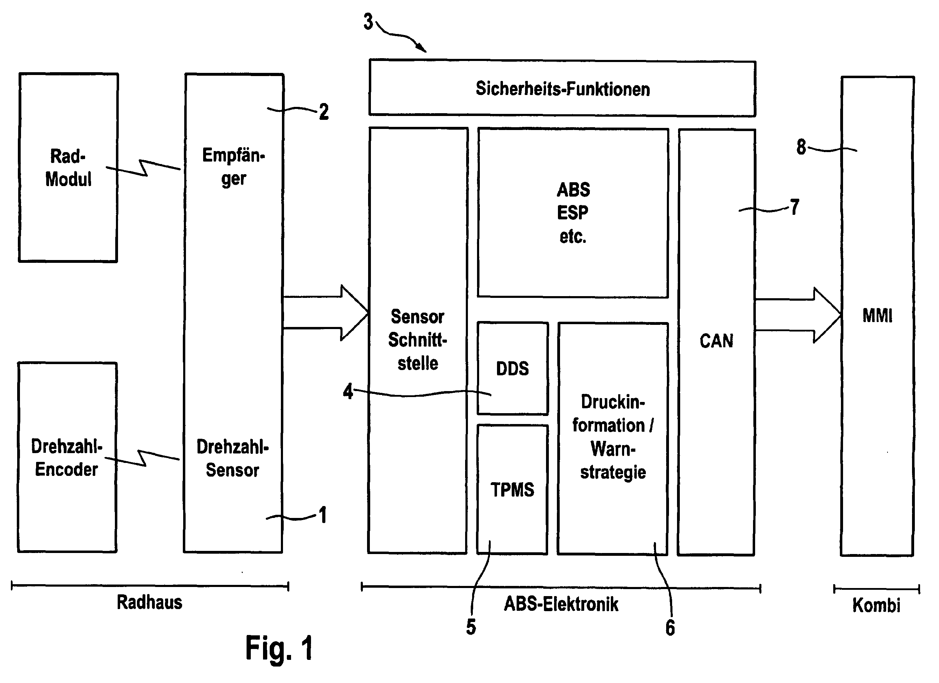

Es zeigt
- Fig. 1: eine Darstellung der Funktionsblöcke eines beispielgemäßen Reifendrucküberwachungssystems für einen Personenkraftwagen mit einem elektronischen Bremsensteuergerät unter anderem für ABS.

In jedem Radhaus ist ein an sich bekannter ABS-Raddrehzahlsensor angeordnet, welcher über eine Stromschnittstelle Raddrehzahlsignale auf an sich bekannte Weise an ein ABS-Steuergerät überträgt. Das ABS-Steuergerät kann auch zusätzliche Funktionen zur Regelung der Fahrdynamik (z.B. ESB bzw. TCS) umfassen. In den Rädern sind an sich bekannte TPMS-Radmodule angeordnet, welche einen Drucksensor und einen Temperatursensor umfassen und diese Signale sowie ein Identifier-Signal über eine Sendeeinrichtung drahtlos senden. Die gesendeten Signale werden durch in den Raddrehzahlsensor integrierte Empfangsschaltungen 2 oder im Bereich des Raddrehzahlsensor montierte passive Antennen aufgenommen.

Im Fall von Empfangsschaltungen im Bereich der Radhäuser können die Druck und Temperatursignale digital über die Raddrehzahlschnittstelle mitübertragen werden, zum Beispiel innerhalb eines an sich bekannten Zusatzprotokolls innerhalb der Pausen zwischen den Raddrehzahlimpulsen.

Im Fall von passiven Antennen wird das Empfangssignal in die Raddrehzahlsensorleitung eingekoppelt und einem im ABS-Steuergerät 3 integrierten Empfänger zugeleitet. Zuvor wird das Druck- und Temperatursignal vom Raddrehzahlsignal durch eine geeignete elektronische Schaltung getrennt.

Innerhalb des Steuergerätes 3 ist neben den an sich bekannten Regelalgorithmen für die Bremsfunktion ein DDS-Algorithmus 4 enthalten, welcher mit Programmschritten zur Ausgabe der Positionserkennung erweitert ist.

Ein weiterer Funktionsblock 5 umfaßt die zur Steuerung und Auswertung von TPMS notwendigen Algorithmen und elektronischen Schaltungsmittel.

In Funktionsblock 6 ist die Strategie für die Druckinformation und der Druckwarnung auf Basis der von DDS und TPMS zur Verfügung gestellten Informationen enthalten. Diese können kundenspezifisch für unterschiedliche Kraftfahrzeugmodelle gestaltet sein, beispielsweise in der Weise, daß jedem Radhaus individuell eine Warnlampe zugeordnet ist, welche signalisiert, wenn ein positionsindividueller Druckschwellenwert unterschritten wird. Alternativ können absolute Druckwerte positionsindividuell an ein Mensch-Maschine-Interface 7 (MMI) z.B. im Armaturenbrett übertragen werden. Die Übertragung an das MMI kann beispielsweise mittels eines Standard-Kraftfahrzeugdatenbus 8 (z.B. CAN) erfolgen.

## Patentansprüche

1. Reifendrucküberwachungssystem für Kraftfahrzeuge, welches ein direkt messendes Druckmeßsystem (2,5) umfaßt, das radindividuelle Reifendruckmeßeinrichtungen oder Reifendruckmeßmodule, Sendeeinrichtungen zur Übertragung der Meßwerte von den einzelnen Rädern zu einer oder mehreren im Fahrzeug installierten Empfangs- und Auswerteeinrichtungen (2,3) und eine zentrale Empfangseinheit (3), welche die auf Messung des Reifendrucks in den einzelnen Rädern basierenden Informationen empfängt und zur Auswerteeinrichtung (3) weiterleitet, aufweist, wobei eine Zuordnung der Druckmeßwerte zu der jeweiligen Montageposition des einen Drucksensor umfassenden Rades erfolgt, und wobei das direkt messende System zur Messung des Reifendrucks mit mindestens einem weiteren indirekt messenden Reifendrucküberwachungssystem (1,4), welches den Reifendruck ausschließlich durch Vergleich und Auswertung des Drehverhaltens der einzelnen Fahrzeugräder detektiert, baulich und/oder funktionell vereinigt ist, **dadurch gekennzeichnet, daß** die Zuordnung der Druckmeßwerte zu der jeweiligen Montageposition des einen Drucksensor umfassenden Rades mit Hilfe des zweiten, auf dem Raddrehverhalten basierenden Überwachungssystem (1,4) erfolgt.

2. Reifendrucküberwachungssystem nach Anspruch 1, **dadurch gekennzeichnet, daß** die Empfangseinheit (2) mit der Auswerteeinrichtung über einen standardisierten Kraftfahrzeugdatenbus, wie etwa CAN, kommuniziert.

3. Reifendrucküberwachungssystem nach Anspruch 1 oder 2, **dadurch gekennzeichnet, daß** die zentrale Empfangseinheit keine Einrichtung zur selbständigen Zuordnung der Druckmeßwerte zu der jeweiligen Montageposition des einen Drucksensor umfassenden Rades aufweist.

4. Reifendrucküberwachungssystem nach mindestens einem der Ansprüche 1 bis 3, **dadurch gekennzeichnet, daß** die radindividuellen Reifendruckmeßmodule in Form von Meß- und Sendeeinrichtungen ausgebildet sind, die baulich mit den Radventilen integriert sind.

5. Reifendrucküberwachungssystem nach mindestens einem der Ansprüche 1 bis 4, **dadurch gekennzeichnet, daß** die zentrale Auswerteeinrichtung ein elektronisches Bremsensteuergerät für beispielsweise ABS, ASR, ESP, EMB, EHB etc. ist.

6. Verfahren zur Reifendrucküberwachung, insbesondere in einem System nach einem der Ansprüche 1 bis 5, wobei der in den einzelnen Reifen aktuell vorhandene Luftdruck mit Hilfe von radindividuellen Druckmeß- und Sendeeinrichtungen erfaßt und zu einer im Kraftfahrzeug installierten zentralen Empfangseinrichtung (2) weitergeleitet wird, und wobei eine Zuordnung der Druckmeßwerte zu der jeweiligen Montageposition des einen Drucksensor umfassenden Rades erfolgt, **dadurch gekennzeichnet, daß** die Zuordnung der Druckmeßwerte zu der jeweiligen Montageposition des einen Drucksensor umfassenden Rades mit Hilfe eines zweiten Drucküberwachungssystems (1,4) erfolgt, welches den Reifendruck ausschließlich durch Vergleich und Auswertung des Drehverhaltens der einzelnen Fahrzeugräder ermittelt (4).

7. Verfahren nach Anspruch 6, **dadurch gekennzeichnet, daß** die Druckmeßeinrichtungen jeweils eine individuelle Kennung senden können, welche die Druckmeßeinrichtungen unterscheidbar macht.

## Claims

1. Tire pressure monitoring system for motor vehicles comprising a direct-measuring pressure measuring system (2, 5), which includes on each individual wheel tire pressure measuring devices or tire pressure measuring modules, transmitting devices for transmitting the measured values from the individual wheels to one or more receiving and evaluating devices (2, 3) installed in the vehicle, and a central receiving unit (3) which receives the information based on the measurement of the tire pressure in the individual wheels and relays it to the evaluating device (3), and with the pressure measuring values being allocated to the respective mounting position of the wheel comprising a pressure sensor, and with the direct-measuring system for measuring the tire pressure being structurally and/or functionally grouped with at least one additional indirect-measuring tire pressure monitoring system (1, 4) detecting the tire pressure exclusively by comparing and evaluating the rotational behavior of the individual vehicle wheels, **characterized in that** the allocation of the pressure measuring values to the respective mounting position of the wheel comprising a pressure sensor is performed by means of a second monitoring system (1, 4) based on the wheel rotational behavior.

2. Tire pressure monitoring system as claimed in claim 1, **characterized in that** the receiving unit (2) communicates with the evaluating device by way of a standardized motor vehicle data bus, such as CAN.

3. Tire pressure monitoring system as claimed in claim 1 or 2,
**characterized in that** the central receiving unit does not include a device for the independent allocation of the pressure measuring values to the respective mounting position of the wheel comprising a pressure sensor.

4. Tire pressure monitoring system as claimed in at least any one of claims 1 to 3,
**characterized in that** the wheel-individual tire pressure measuring modules are configured as measuring and transmitting devices being structurally integrated with the wheel valves.

5. Tire pressure monitoring system as claimed in at least any one of claims 1 to 4,
**characterized in that** the central evaluating device is an electronic brake control unit for e.g. ABS, TCS, ESP, EMB, EHB, etc.

6. Method for tire pressure monitoring, in particular in a system as claimed in any one of claims 1 to 5, wherein the inflation pressure currently prevailing in the individual tires is detected by means of wheel-individual pressure-measuring and transmitting devices and is relayed to a central receiving device (2) installed in the motor vehicle, and wherein the pressure measuring values are allocated to the respective mounting position of the wheel comprising a pressure sensor,
**characterized in that** the pressure measuring values are allocated to the respective mounting position of the wheel comprising a pressure sensor by means of a second pressure monitoring system (1, 4), which determines the tire pressure exclusively by comparing and evaluating the rotational behavior of the individual vehicle wheels (4).

7. Method as claimed in claim 6,
**characterized in that** each pressure measuring device can send an individual identification key rendering the pressure measuring devices distinguishable.

## Revendications

1. Système de contrôle de la pression des pneus de véhicule automobile, qui comprend un système de mesure de pression (2, 5) à mesure directe qui comporte des dispositifs individuels aux roues de mesure de pression des pneus ou des modules de mesure de pression des pneus, des dispositifs d'émission pour la transmission des valeurs de mesure depuis les différentes roues vers un ou plusieurs dispositifs de réception et d'interprétation (2, 3) installés dans le véhicule, et une unité de réception centrale (3) qui reçoit les informations fondées sur la mesure de la pression des pneus des différentes roues et les transmet au dispositif d'interprétation (3), les valeurs de mesure de pression étant attribuées à la position de montage respective de la roue comprenant un capteur de pression, et le système à mesure directe pour la mesure de la pression des pneus étant réuni de par sa construction et/ou de manière fonctionnelle à au moins un autre système de contrôle de pression des pneus (1, 4) à mesure indirecte qui détecte la pression des pneus exclusivement par comparaison et interprétation du comportement en rotation des différentes roues du véhicule, **caractérisé en ce que** l'attribution des valeurs de mesure de pression, à la position de montage respective de la roue comprenant un capteur de pression, s'effectue à l'aide du second système de contrôle (1, 4) qui se fonde sur le comportement en rotation des roues.

2. Système de contrôle de la pression des pneus selon la revendication 1, **caractérisé en ce que** l'unité de réception (2) communique avec le dispositif d'interprétation par un bus de données de véhicule automobile standard, tel que par exemple un bus CAN.

3. Système de contrôle de la pression des pneus selon la revendication 1 ou 2, **caractérisé en ce que** l'unité de réception centrale ne comporte aucun dispositif pour l'attribution autonome des valeurs de mesure de pression à la position de montage respective d'une roue comprenant un capteur de pression.

4. Système de contrôle de la pression des pneus selon l'une au moins des revendications 1 à 3, **caractérisé en ce que** les modules individuels de mesure de la pression des pneus sont réalisés sous la forme de dispositifs de mesure et d'émission qui sont intégrés de par leur construction aux soupapes des roues.

5. Système de contrôle de la pression des pneus selon l'une au moins des revendications 1 à 4, **caractérisé en ce que** le dispositif d'interprétation central est un appareil électronique de commande des freins, par exemple pour les systèmes ABS, ASR, ESP, EMB, EHB, etc.

6. Procédé de contrôle de la pression des pneus, en particulier dans un système selon l'une des revendications 1 à 5, dans lequel la pression régnant à l'instant dans les différents pneus est relevée à l'aide de dispositifs, individuels aux roues, de mesure de la pression et d'émission et transmise à un dispositif de réception central (2) installé dans le véhicule automobile, et dans lequel les valeurs de mesure de pression sont attribuées à la position de montage respective d'une roue comprenant un capteur de pression, **caractérisé en ce que** l'attribution des valeurs de mesure de pression à la position de montage respective de la roue comprenant un capteur de pression, s'effectue à l'aide d'un second système de contrôle de la pression (1, 4) qui détermine la pression des pneus exclusivement par comparaison et interprétation du comportement en rotation des différentes roues du véhicule.

7. Procédé selon la revendication 6, **caractérisé en ce que** les dispositifs de mesure de la pression peuvent émettre chacun une identification individuelle qui permet de distinguer les dispositifs de mesure de la pression.
